# EUROPÄISCHE PATENTSCHRIFT

(11) **EP 2 149 825 B1**
(45) Veröffentlichungstag und Bekanntmachung des Hinweises auf die Patenterteilung: **28.11.2012**
(21) Anmeldenummer: 08013783.9
(22) Anmeldetag: 31.07.2008
(51) Int. Cl.: G05B 19/042

(54) **Projektnavigator zur hierarchischen Darstellung von Technologieobjekten, Verwendung eines derartigen Projektnavigators, Speichermedium und Engineering-System**
Project navigator for hierarchical portrayal of technological objects, use of such a project navigator, storage medium and engineering system
Navigateur de projet destiné à la représentation hiérarchique d'objets technologiques, utilisation d'un tel navigateur de projet, support de stockage et système d'ingénierie

(43) Veröffentlichungstag der Anmeldung: 03.02.2010
(73) Patentinhaber: Siemens Aktiengesellschaft, 80333 München (DE)
(72) Erfinder: Birzer, Johannes, 91085 Rezelsdorf (DE); Fister, Markus, 91054 Erlangen (DE); Kram, Raimund, 91056 Erlangen (DE)

(56) Entgegenhaltungen:
- EP-A- 1 217 476
- EP-A- 1 310 841
- EP-A- 1 522 910
- WO-A-2005/124479

## Beschreibung

Die Erfindung betrifft einen Projektnavigator zur hierarchischen Darstellung von Technologieobjekten auf einer Anzeigevorrichtung insbesondere eines Computers. Die Technologieobjekte sind untereinander verschaltet und modellieren eine Maschine mit kaskadierter Gleichlaufsteuerung. Die jeweiligen Technologieobjekte können mittels eines Benutzereingabemittels ausgewählt werden.

Die Erfindung betrifft weiterhin eine vorteilhafte Verwendung eines derartigen Projektnavigators zur hierarchischen Darstellung von Technologieobjekten auf einer Anzeigevorrichtung.

Schließlich betrifft die Erfindung ein Speichermedium, auf welchem ein derartiger Projektnavigator in maschinenlesbarer Form abgespeichert ist, sowie ein Engineering-System zur Projektierung zumindest eines Teils einer Maschine oder einer Anlage mit kaskadierter Gleichlaufsteuerung.

Ein derartiger Projektnavigator, dessen Verwendung sowie ein derartiges Engineering-System mit einem Prozessor zum Ausführen eines solchen Projektnavigators ist aus der europäischen Patentanmeldung EP 1 217 476 A2 bekannt.

Aus der europäischen Patentanmeldung EP 1 310 841 A1 ist ein Verfahren zur Erzeugung neuer Strukturen von bestehenden Strukturen in einem computerisierten System bekannt. Bei diesem Verfahren können mittels eines Computers automatisiert Objektbeschreibungen von realen technischen Objekten, wie z.B. einem Anlagenteil, entsprechend ihrer jeweiligen Funktion, ihres jeweiligen Ortes oder ihrer jeweiligen Prozessfolge innerhalb einer technischen Anlage umgesetzt werden.

Bei den Maschinen oder Anlagenteilen mit kaskadierter Gleichlaufsteuerung handelt es sich z.B. um Druckmaschinen, welche zumeist eine Vielzahl von kaskadiert hintereinander angeordneten Druckeinheiten aufweisen. Derartige Druckeinheiten weisen ihrerseits mehrere geregelte, motorisch angetriebene Achsen auf, um eine zu bedruckende Papierbahn synchron durch die vielen Druckeinheiten hindurch zu transportieren. Dabei sind die angetriebenen Achsen in mechanischer Hinsicht, wie z.B. über eine Königswelle oder über einen Zahnriemen, untereinander nicht gekoppelt. Die Steuerung und Regelung der angetriebenen Achsen erfolgt zumeist über eine übergeordnete Steuerung und auf Basis eines Leitwertes zur übergeordneten Geschwindigkeitsvorgabe. Von diesem Leitwert können z.B. entsprechende Übersetzungsverhältnisse im Sinne eines Getriebes abgeleitet werden. Es können auch zur Regelung der gesamten Maschine virtuelle Achsen vorgesehen werden, welche ihrerseits einen Leitwert für einen Teil der Achsen bereitstellen können. Auf Basis des übergeordneten Leitwertes können zudem Geschwindigkeitsdifferenzen im Sinne eines Schlupfes vorgegeben werden, um verschiedene mechanische Längsspannungen in die Papierbahn aufbringen zu können.

Alternativ kann es sich bei derartigen Maschinen um ein Zellulosewerk, um Papierwerk, um Walzwerk oder dergleichen handeln. Wesentlich ist hier, dass mehrere, kaskadiert hintereinander angeordneten Maschinenteilen in einem Gleichlaufbetrieb angesteuert werden.

Die Steuerung und Regelung der angetriebenen Achsen erfolgt vorzugsweise durch sogenannte Technologieobjekte. Diese bieten einem Anwender eine technologische Sicht auf Aktoren und Sensoren, und stellen technologische Funktionen für diese zur Verfügung. Bei den Technologieobjekten handelt es sich im Wesentlichen um Softwaremodule, welche in Echtzeit auf einer Prozessoreinheit der Antriebssteuerung, wie z.B. auf einer Antriebssteuerung vom Typ SIMOTION der Fa. Siemens, ausgeführt wird. Über ein jeweiliges Eingangsinterface und Ausgangsinterface können diese für die vorliegende Automatisierungsaufgabe parametriert werden. In einem Engineering-System ist dann mit Hilfe von vorzugsweise graphischen Projektierungswerkzeugen eine kaskadierte Verschaltung dieser Technologieobjekte möglich.

Allerdings gestaltet es sich für einen Anwender bei einem großen, komplexen Projekt mit einer Vielzahl von Verschaltungen als besonders schwierig, den "Überblick" über das gesamte Projekt zu behalten. Insbesondere ist es schwierig, die gesamten Bewegungsverschaltungen und den gesamten Bewegungssignalfluss zu ermitteln. Dies ist z.B. bei einer Diagnose der Fall, bei dem der Anwender das Projekt nicht kennt.

Zur Lösung dieses Problems ist es bekannt, die eingangsseitigen Objektverschaltungen in spezifischen Masken an den einzelnen Technologieobjekten und/oder Verknüpfungen in einem Projektnavigator anzeigen zu lassen. Dabei lehnen sich die bekannten Projektnavigatoren in ihrem graphischen Erscheinungsbild und in ihrer Handhabung stark an den für PC-Benutzer allgemein bekannten Windows-Explorer an. Dadurch ist für den Anwender ein Navigieren durch die gesamte Projektstruktur möglich. Eine solche Struktur kann z.B. auf ein für die Maschine erforderliches Mengengerüst basieren.

Allerdings ist es bis jetzt für einen Anwender eines herkömmlichen Projektnavigators nicht möglich, sämtliche Verschaltungen eines Technologieobjekts anzeigen zu lassen. Hierzu müssen die betreffenden Technologieobjekte gezielt angewählt und deren weitere Verschaltungen ermittelt werden. Der Anwender muss dann per Hand von Technologieobjekt zu Technologieobjekt navigieren.

Es ist somit eine Aufgabe der Erfindung, einen Projektnavigator anzugeben, welcher eine verbesserte Darstellung des Bewegungssignalflusses sowie der Objektverschaltungen in einem Projekt erlaubt.

Es ist eine weitere Aufgabe, eine geeignete Verwendung für einen derartigen Projektnavigator, ein Speichermedium mit einem abgespeicherten, derartigen maschinenlesbaren Projektnavigator sowie ein Engineering-System unter anderem zum Ausführen eines derartigen Projektnavigators anzugeben.

Die Aufgabe der Erfindung wird mit einem Projektnavigator mit den Merkmalen des Patentanspruchs 1 gelöst. Vorteilhafte Ausführungsformen sind in den abhängigen Ansprüchen 2 bis 5 angegeben. Im unabhängigen Anspruch 6 ist eine geeignete Verwendung des erfindungsgemäßen Projektnavigators zur Darstellung von Technologieobjekten einer Papierdruckmaschine, eines Zellulosewerks, eines Papierwerks, eines Walzwerks oder dergleichen auf einer Anzeigevorrichtung genannt. Im unabhängigen Anspruch 7 ist ein Speichermedium angegeben, auf welchem ein erfindungsgemäßer Projektnavigator in maschinenlesbarer Form gespeichert ist. Schließlich ist im Anspruch 8 ein Engineering-System unter anderem zum Ausführen eines erfindungsgemäßen Projektnavigators auf einem Prozessor des Engineering-Systems genannt.

Erfindungsgemäß wird der zu einem ausgewählten Technologieobjekt zugehörige eingangs- und/oder ausgangsseitige Verschaltungsbaum des Technologieobjekts zusammen mit weiteren Technologieobjekten in derselben hierarchischen Darstellung dargestellt. Dadurch sind zu jedem ausgewählten Technologieobjekt vorteilhaft der zugehörige eingangsseitige Verschaltungsbaum und/oder der zugehörige ausgangsseitige Verschaltungsbaum in einer übersichtlichen hierarchischen Anordnung darstellbar. Dadurch kann vorteilhaft in einem Diagnosefall ein Fehler einfach und schnell ausfindig gemacht werden.

Insbesondere werden zu einem ausgewählten Technologieobjekt der zugehörige eingangs- und/oder ausgangsseitige Verschaltungsbaum des Technologieobjekts sowie alle noch weiteren Unterbäume dargestellt.

Nach einer Ausführungsform des Projektnavigators wird in einem Onlinebetrieb der Maschine die jeweilige wirksame Verschaltung im Projektnavigator optisch hervorgehoben dargestellt. Dadurch kann einem Anwender der gerade wirksame Bewegungssignalfluss im Projekt angezeigt werden.

Im Besonderen modellieren die Technologieobjekte die technologische Funktion einer Achse, eines Gebers, eines Leitwertes, eines Nockens, einer Kurvenscheibe, eines Messtasters und dergleichen. Durch eine entsprechende symbolische Darstellung der Technologieobjekte im Projektnavigator erhält ein Anwender einen schnellen Überblick über die funktionalen Beziehungen der Technologieobjekte untereinander. So können beispielsweise gerade aktive Technologieobjekte, wie z.B. eine gerade aktive Kurvenscheibe, zum schnelleren Überblick und zum besseren Verständnis gestalterisch hervorgehoben werden, wie z.B. durch farbliche Kennzeichnung oder farbliche Hinterlegung.

Besonders vorteilhaft ist es, wenn die zu einem ausgewählten Technologieobjekt gehörenden Parameter eines Eingangs- und Ausgangsinterface des Technologieobjektes als Systeminformation dargestellt wird. Dadurch erhält der Anwender einen detaillierten Einblick in das ausgewählte Technologieobjekt.

Der erfindungsgemäße Projektnavigator ist als Softwareprogramm bzw. als Softwaremodul realisiert. Ist er auf einem Speichermedium in maschinenlesbarer Form abgespeichert, so kann der Projektnavigator durch einen Prozessor eines Steuergerätes oder eines Antriebssteuergerätes direkt ausgeführt werden. Als Speichermedium kommen insbesondere optische Speichermedien, wie z.B. eine CD-ROM oder DVD-ROM, magnetische Speichermedien, wie z.B. eine Diskette oder Festplatte, und insbesondere Festspeicher in Frage, wie z.B. ein USB-Stick oder eine Flash-Speicherkarte. Letztere sind z.B. SD-, CF- oder MM-Speicherkarten.

Schließlich wird die Aufgabe der Erfindung durch ein Engineering-System gelöst, welches eine Anzeigevorrichtung, ein Benutzereingabemittel und einen Prozessor zum Ausführen eines erfindungsgemäßen Projektnavigators zur hierarchischen Darstellung von Technologieobjekten auf der Anzeigevorrichtung aufweist. Die Anzeigevorrichtung ist vorzugsweise ein Monitor. Bevorzugte Benutzereingabemittel sind eine Tastatur sowie eine Maus.

Die Erfindung sowie vorteilhafte Ausführungen der Erfindung werden im Weiteren anhand der nachfolgenden Figuren näher beschrieben. Es zeigen
- FIG 1: eine schematische Darstellung einer Druckeinheit mit einer Reihe von kaskadiert, in einem Gleichlaufbetrieb hintereinander angeordneten Druckeinheiten, mit einer damit verbundenen Steuerung und einem damit verbundenen Engineering-System zur Ausführung eines erfindungsgemäßen Projektnavigators,
- FIG 2: eine graphische Darstellung untereinander verbundener Technologieobjekte einer weiteren kaskadiert, in einem Gleichlauf betriebenen modellierten Druckmaschine,
- FIG 3: ein Beispiel für einen Projektnavigator nach dem Stand der Technik,
- FIG 4: ein Beispiel für einen erfindungsgemäßen Projektnavigator mit einem "aufgeklappten", ausgangsseitigen Verschaltungsbaum eines ausgewählten Technologieobektes "Achse_1_v_GLEICHLAUF" und
- FIG 5: ein Beispiel mit weiter "aufgeklappten" ein- und ausgangsseitigen Unterverschaltungsbäumen für die ausgewählten Technologieobjekte "Achse_33_GLEICH-LAUF" und "Achse_34_GLEICHLAUF" gemäß FIG 4.

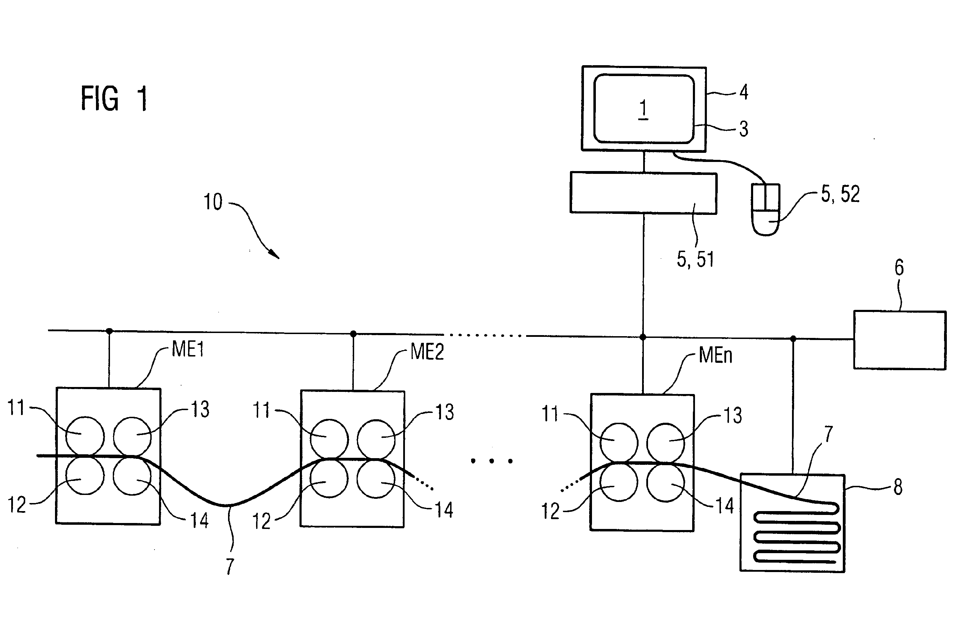

FIG 1 zeigt eine schematische Darstellung einer Druckmaschine 10 mit einer Reihe von kaskadiert, in einem Gleichlaufbetrieb hintereinander angeordneten Druckeinheiten als Maschineneinheiten ME1, ME2, MEn. Jede Druckeinheit ME1, ME2, MEn weist beispielhaft vier angetriebene Achsen in Form von Druckwalzen 11-14 auf, die paarweise eine Papierbahn 7 zur jeweils nächsten Druckeinheit ME1, ME2, MEn weiterbefördern. In den jeweiligen Druckeinheiten ME1, ME2, MEn können z.B. die entsprechenden Druckgrundfarben aufgebracht werden. Am Ende der Kaskade ist eine Folgemaschine 8 in Form einer Papierablagevorrichtung vorhanden. Weiterhin sind alle Druckeinheiten ME1, ME2, MEn sowie die Folgemaschine 8 über ein Bussystem mit einer übergeordneten Steuerung 6 verbunden. An das Bussystem ist zudem ein Engineering-System 4 unter anderem zur Ausführung eines erfindungsgemäßen Projektnavigators 1 angeschlossen.

Alternativ kann es sich bei der Maschine 10 bzw. bei dem Anlagenteil um ein Zellulosewerk, um ein Papierwerk, um ein Walzwerk oder dergleichen handeln.

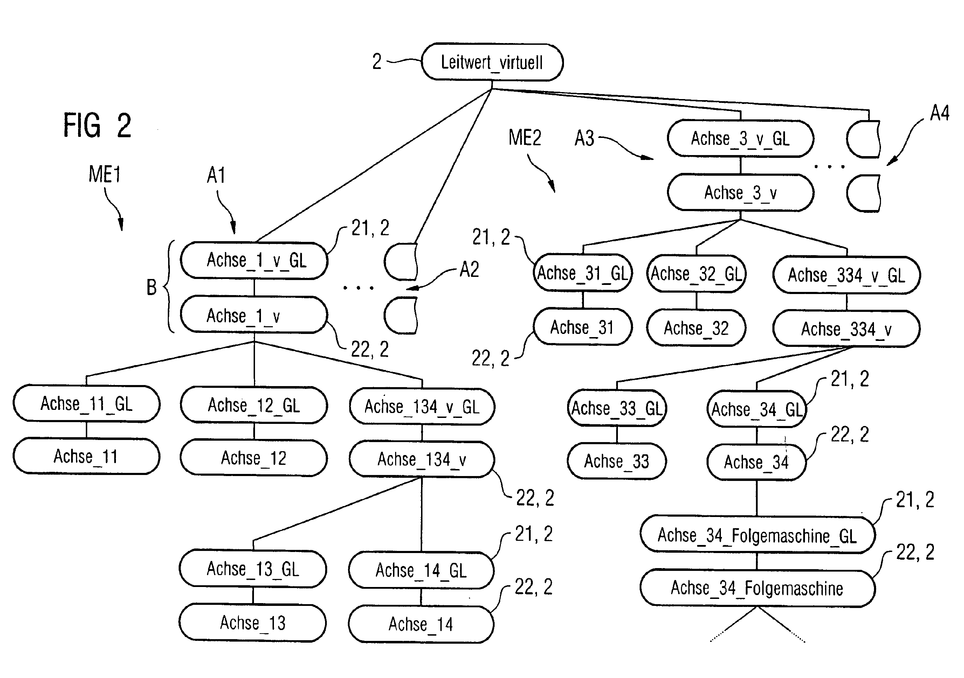

FIG 2 zeigt eine graphische Darstellung untereinander verbundener Technologieobjekte 2 einer weiteren, kaskadiert in einem Gleichlauf betriebenen modellierten Druckmaschine 10. Das auf den Technologieobjekten 2 basierende Modell weist beispielhaft zwei Druckeinheiten ME1, ME2 als Maschineneinheit sowie eine Vielzahl von gesteuerten Achsen auf. Mit A1 bis A4 sind virtuelle Achsen bezeichnet, denen Gruppen von darunterliegend angeordneten "realen" Achsen zugeordnet sind. Die Achsen A1, A2 sind dabei der ersten Maschineneinheit ME1, die Achsen A3, A4 der zweiten Maschineneinheit ME2 zugeordnet. Die beiden Punktfolgen symbolisieren, dass noch weitere "virtuelle" Achsen sowie weitere "reale" Achsen jeweils in Form von Technologieobjekten 2 vorhanden sein können. Bei den virtuellen Achsen kann es sich um sogenannte Rechenachsen handeln, welche zum Beispiel eine mechanische Übersetzung modellieren.

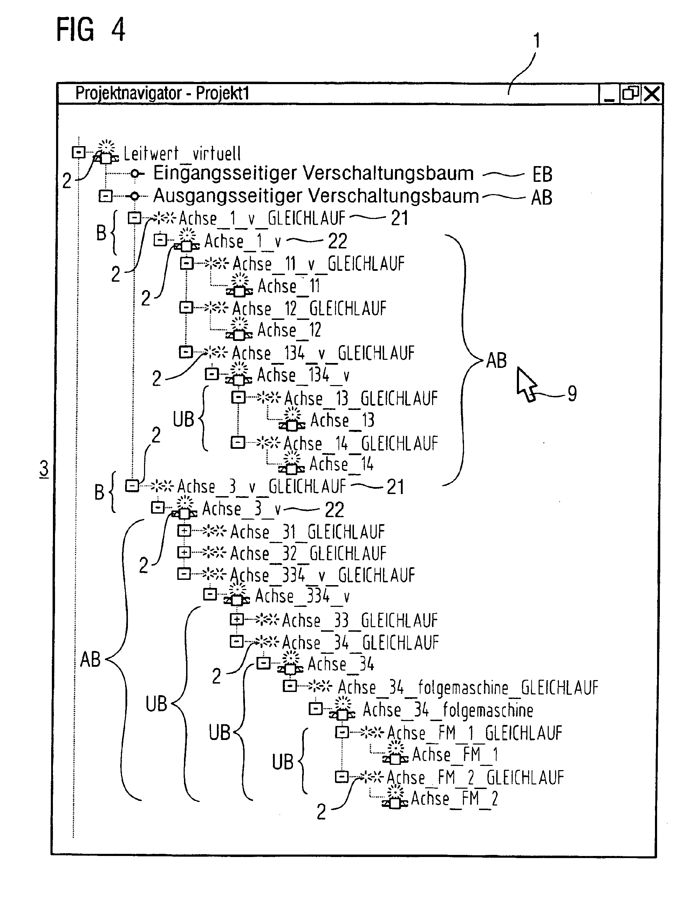

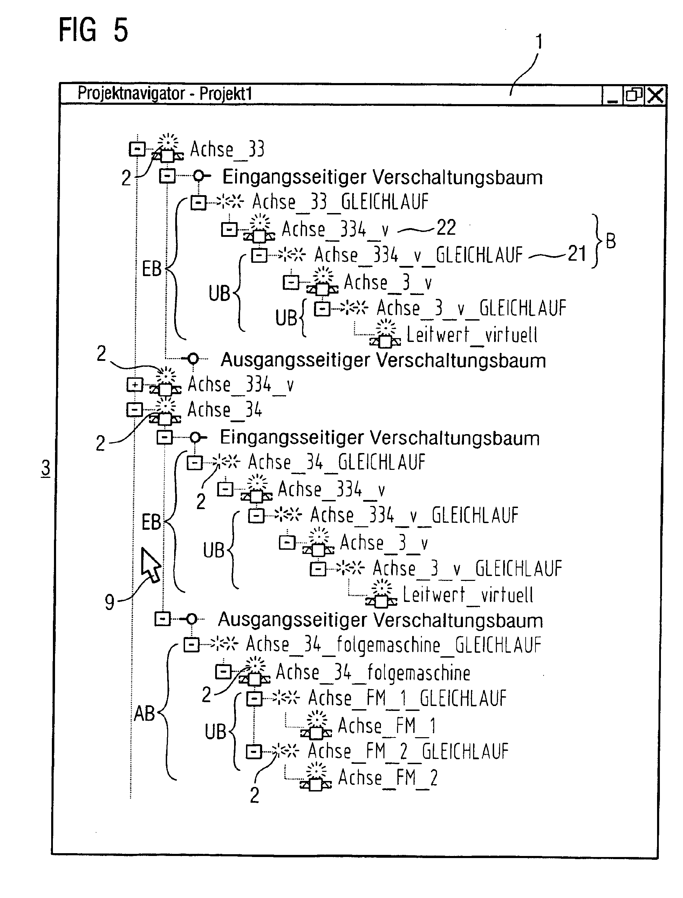

Im oberen Teil der FIG 2 ist ein Technologieobjekt 2 mit der Bezeichnung "Leitwert_virtuell" dargestellt. Dieser repräsentiert eine übergeordnete, das heißt globale Geschwindigkeitsvorgabe für die Druckmaschine. Zur Bildung dieses Leitwertes kann das jeweilige Technologieobjekt 2 eingangsseitig beispielsweise auf ein datentechnisch aufbereitetes Drehgebersignal zugreifen. Der "Leitwert_virtuell" wird den darunter angeordneten Technologieobjekten 21 "Achse_1_v_GL" sowie "Achse_3_v_GL" eingangsseitig zugeführt. Die Abkürzung "GL" steht für "GLEICHLAUF" und die Abkürzung "v" für "virtuell". Jeweils darunterliegend angeordnet sind die zugehörigen, sogenannten "gebandelten" Technologieobjekte 22 "Achse_1_v" sowie "Achse_3_v". Die Bandelung ist durch eine Klammer mit dem Bezugszeichen B bezeichnet. Diese Anordnung ist vorteilhaft, um die in den nachfolgenden Figuren FIG 4 und FIG 5 gezeigte hierarchische Darstellung für den Bewegungssignalfluss im erfindungsgemäßen Projektnavigator 1 zu vereinfachen.

In der jeweils Ebene darunter sind weitere Technologieobjekte 2 vorhanden, von den beispielsweise die "Achse_11_GL", die "Achse_12_GL", die "Achse_31_GL" und die "Achse_32_GL" direkt an einen lokalen Leitwert gekoppelt sind, während die "Achse_134_v_GL" und die "Achse_334_v_GL" an den virtuellen, übergeordneten Maschinenleitwert "Leitwert_virtuell" gekoppelt sind. Ein lokaler Leitwert erlaubt im Vergleich dazu nur lokal wirksame Einstellmöglichkeiten. In entsprechender Weise können noch weiter darunterliegend angeordnete Technologieobjekte 2 in entsprechender Weise an den jeweils übergeordneten virtuellen Leitwert, an den virtuellen Maschinenleitwert "Leitwert_virtuell" oder an einen lokalen Leitwert gekoppelt sein.

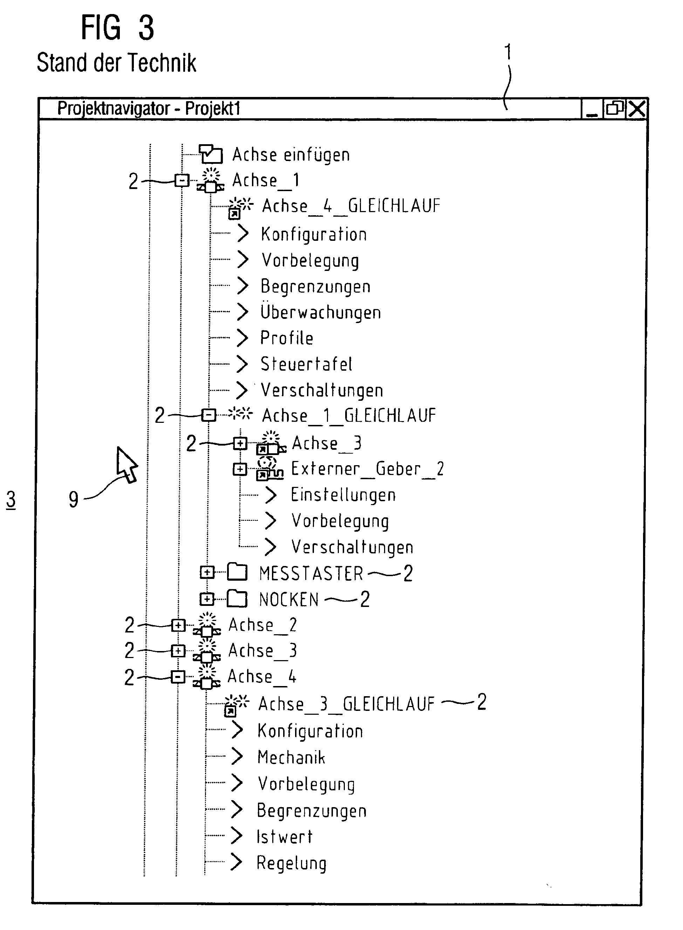

FIG 3 zeigt ein Beispiel für einen Projektnavigator 1 nach dem Stand der Technik. Der gezeigte Projektnavigator 1 ist beispielhaft eine Applikation in einem Windows-Fenster. Mit dem Bezugszeichen 3 ist der gesamte Bereich der Anzeigevorrichtung bezeichnet. Mit dem Bezugszeichen 9 ist ein Mauszeiger zum Auswählen der gezeigten, durch Zahnräder und Achsen symbolisierten Technologieobjekte 2 bezeichnet. Die Technologieobjekte 2 sind dabei zur Modellierung z.B. der technologischen Funktion einer Achse, eines Gebers, eines Leitwertes, eines Nockens, einer Kurvenscheibe, eines Messtasters und dergleichen vorgesehen. Hierzu weisen die Technologieobjekte 2 ein nicht weiter gezeigtes verschaltbares Eingangsinterface und ein verschaltbares Ausgangsinterface auf. Auf diese kann durch Auswählen der mit einem Pfeil nach rechts gekennzeichneten Unterpunkte "Konfiguration, Vorbelegung usw." zugegriffen werden.

Wie die FIG 3 zeigt, spiegelt die gezeigte Darstellung lediglich die Projektstruktur mit den jeweils unter den gezeigten Technologieobjekten 2 angeordneten weiteren Technologieobjekten 2 wider. Um weitere Informationen in Hinblick auf den Bewegungssignalfluss der jeweiligen Technologieobjekte 2 zu erhalten, sind die im jeweiligen "Unterverzeichnis" angeordneten weiteren Technologieobjekte 2 hinsichtlich ihrer eingangs- und ausgangsseitigen Verschaltung weiter zu untersuchen, insbesondere durch Auswählen des zugehörigen Unterpunktes "Verschaltungen".

FIG 4 zeigt ein Beispiel für einen erfindungsgemäßen Projektnavigator 1 mit einem "aufgeklappten", ausgangsseitigen Verschaltungsbaum AB eines ausgewählten Technologieobjektes 2 "Achse_1_v_GLEICHLAUF".

Erfindungsgemäß ist der Projektnavigator 1 nun zur hierarchischen Darstellung von Technologieobjekten 2 zur Anzeige des zugehörigen Bewegungssignalflusses auf einer Anzeigevorrichtung 3 vorgesehen. Mit dem Bezugszeichen 9 ist ein Mauszeiger dargestellt, welcher zur Auswahl der Technologieobjekte 2 mittels einer PC-Maus gesteuert werden kann. Werden die jeweiligen Technologieobjekte 2 nun mittels eines Benutzereingabemittels, wie z.B. der PC-Maus, ausgewählt, so wird zu einem ausgewählten Technologieobjekt 2 der zugehörige eingangs- und/oder ausgangsseitige Verschaltungsbaum EB, AB des Technologieobjekts 2 zusammen mit weiteren Technologieobjekten 2 dargestellt. Mit anderen Worten werden nun, unabhängig von einer zuvor angelegten, projektbezogenen Darstellung, die Verschaltungen der Technologieobjekte 2 untereinander gezeigt, die sich aus ihrem jeweiligen Bewegungssignalfluss für eine modellierte Maschine mit kaskadierter Gleichlaufsteuerung ergeben.

Vorzugsweise werden zu einem ausgewählten Technologieobjekt 2 neben dem zugehörigen eingangs- und/oder ausgangsseitigen Verschaltungsbaum EB, UB des Technologieobjekts 2 auch alle weiteren Unterbäume UB dargestellt.

Im Beispiel der FIG 4 ist nur der ausgangsseitige Verschaltungsbaum AB zum oberen Technologieobjekt 2 "Achse_1_v_ GLEICHLAUF" aufgeklappt dargestellt. Es ist auch bereits der zum untergeordneten Technologieobjekt 2 "Achse_134_v" zugehörige, ausgangsseitige Unterbaum UB dargestellt. In entsprechender Weise ist die ausgangsseitige Verschaltung des Technologieobjektes 2 "Achse _3_GLEICHLAUF" in Hinblick auf den Bewegungssignalfluss hierarchisch dargestellt. Ein Vergleich mit der FIG 2 zeigt, dass die in der FIG 4 zu einem ausgewählten Technologieobjekt 2 im zugehörigen Unterverzeichnis "Ausgangsseitiger Verschaltungsbaum" gehörenden Technologieobjekte 2 denen in der FIG 2 jeweils "darunterliegenden" Technologieobjekte 2 entsprechen.

Wesentlicher Gedanke der vorliegenden Erfindung ist, dass neben einer Navigationsmöglichkeit durch eine bereits vorgegebene Projektstruktur, die unabhängig von einer Struktur in Hinblick auf den kaskadierten Bewegungssignalfluss ist, eine weitere optionale Navigationsmöglichkeit im erfindungsgemäßen Projektnavigator gegeben ist, die ein Navigieren durch eine hierarchisch, kaskadierte Struktur in Hinblick auf den Bewegungssignalflusses der modellierten Maschine erlaubt.

FIG 4 zeigt auch die Funktion der mit dem Bezugszeichen "B" bezeichneten "Bandelung". Dabei beinhalten die mit dem Bezugszeichen 22 bezeichneten Technologieobjekte den jeweiligen, zum gebandelten Technologieobjekt 21 zugehörigen Unterbaum UB, je nachdem, ob es sich um einen eingangsseitige Verschaltungsbaum EB oder um einen ausgangsseitigen Verschaltungsbaum AB handelt. Dadurch ist eine Integration der weiteren, optionalen hierarchischen Darstellung in Hinblick auf den Bewegungssignalfluss in die bereits vorhandene Projektstruktur auf einfache Weise möglich.

FIG 5 zeigt ein Beispiel mit weiter "aufgeklappten" ein- und ausgangsseitigen Unterverschaltungsbäumen UB für die ausgewählten Technologieobjekte "Achse_33_GLEICHLAUF" und "Achse_34_GLEICHLAUF" gemäß FIG 4.

Ein Vergleich mit der FIG 2 zeigt, dass die in der FIG 5 zu einem ausgewählten Technologieobjekt 2 im zugehörigen Unterverzeichnis "Eingangsseitiger Verschaltungsbaum" gehörenden Technologieobjekte 2 denen in der FIG 2 jeweils "darüberliegenden" Technologieobjekte 2 entsprechen.

## Patentansprüche

1. Projektnavigator zur projektbezogenen hierarchischen Darstellung von Technologieobjekten (2) auf einer Anzeigevorrichtung (3) insbesondere eines Computers (4), welche Darstellung eine Navigation durch eine vorgegebene Projektstruktur ermöglicht, wobei die Technologieobjekte (2) untereinander verschaltet sind und eine Maschine (10) mit kaskadierter Gleichlaufsteuerung modellieren, und wobei die jeweiligen Technologieobjekte (2) mittels eines Benutzereingabemittels (5) ausgewählt werden können,
**dadurch gekennzeichnet, dass** in derselben hierarchischen Darstellung zu einem ausgewählten Technologieobjekt (2) der zugehörige eingangs- und/oder ausgangsseitige Verschaltungsbaum (6) des Technologieobjekts (2) zusammen mit weiteren Technologieobjekten (2) zur Anzeige des zugehörigen Bewegungssignalflusses dargestellt wird derart, daß eine weitere Navigationsmöglichkeit gegeben ist, die ein Navigieren im Hinblick auf den Bewegungssignalfluss der modellierten Maschine (10) erlaubt.

2. Projektnavigator nach Anspruch 1, wobei zu einem ausgewählten Technologieobjekt (2) der zugehörige eingangs- und/oder ausgangsseitige Verschaltungsbaum (6) des Technologieobjekts (2) sowie alle weiteren Unterbäume (61, 62) dargestellt werden.

3. Projektnavigator nach Anspruch 1 oder 2, wobei in einem Onlinebetrieb der Maschine (10) die jeweilige wirksame Verschaltung im Projektnavigator optisch hervorgehoben dargestellt wird.

4. Projektnavigator nach Anspruch 3, wobei die Technologieobjekte (2) die technologische Funktion einer Achse (7), eines Gebers (8), eines Leitwertes (9), eines Nockens (10), einer Kurvenscheibe, eines Messtasters (11) und dergleichen modellieren.

5. Projektnavigator nach Anspruch 4, wobei die Technologieobjekte (2) ein verschaltbares Eingangsinterface und ein verschaltbares Ausgangsinterface aufweisen.

6. Verwendung eines Projektnavigators (1) nach einem der vorangegangenen Ansprüche zur projektbezogenen hierarchischen Darstellung von Technologieobjekten (2) einer Papierdruckmaschine, eines Zellulosewerks, eines Papierwerks, eines Walzwerks oder dergleichen auf einer Anzeigevorrichtung (3).

7. Speichermedium mit einem in maschinenlesbarer Form abgespeicherten Projektnavigator (1) nach einem der vorangegangenen Ansprüche 1 bis 5.

8. Engineering-System zur Projektierung zumindest eines Teils einer Maschine (10) oder einer Anlage mit kaskadierter Gleichlaufsteuerung, wobei das Engineering-System eine Anzeigevorrichtung (3), Benutzereinqabemittel (5) und einen Prozessor zum Ausführen eines Projektnavigators (1) nach einem der Ansprüche 1 bis 5 zur projektbezogenen hierarchischen Darstellung von Technologieobjekten (2) auf der Anzeigevorrichtung (3) aufweist.

## Claims

1. Project navigator for the project-specific hierarchical display of technological objects (2) on a display device (3), in particular on a computer (4), which display enables a navigation through a predetermined project structure, whereby the technological objects (2) are mutually interconnected and model a machine (10) with cascaded synchronous control, and whereby each of the technological objects (2) can be selected by means of a user input facility (5)
**characterised in that**
in the same hierarchical display, the input and/or output side connection tree (6) of the technological object (2) associated with a selected technological object (2) is displayed together with further technological objects (2) to display the associated motion signal flow such that a further navigation option is provided which allows for navigation in respect of the motion signal flow of the modelled machine (10).

2. Project navigator according to claim 1, whereby the input and/or output side connection tree (6) associated with a selected technological object (2) is displayed, together with all the further subtrees (61, 62).

3. Project navigator according to claim 1 or 2, whereby the relevant effective connection can be visually highlighted in the project navigator in an online mode of the machine (10).

4. Project navigator according to claim 3, where the technological objects (2) model the technological functioning of an axle (7), a sensor (8), a guide value (9), a cam (10), a cam plate, a measuring head (11) and the like.

5. Project navigator according to claim 4, where the technological objects (2) have a connectable input interface and a connectable output interface.

6. Use of a project navigator (1) according to one of the preceding claims, for the project-specific hierarchical display of technological objects (2) for a paper printing press, a cellulose factory, a paper works, a rolling mill or the like on a display device (3).

7. Storage medium with a project navigator (1) stored in machine-readable form according to one of the preceding claims 1 to 5.

8. Engineering system for configuring at least a part of a machine (10) or a plant with a cascaded synchronous control system, where the engineering system has a display device (3), user input facilities (5) and a processor for executing a project navigator (1), according to one of the claims 1 to 5, for the project-specific hierarchical display of technological objects (2) on the display device (3).

## Revendications

1. Navigateur de projet pour la représentation hiérarchique rapportée à un projet, d'objets ( 2 ) de la technologie sur un dispositif ( 3 ) d'affichage, notamment d'un ordinateur ( 4 ), représentation qui permet une navigation dans une structure de projet prescrite, les objets ( 2 ) de la technologie étant câblés entre eux et modélisant une machine ( 10 ) avec une commande de synchronisme en cascade et les objets ( 2 ) respectifs de la technologie pouvant être sélectionnés à l'aide d'un moyen ( 5 ) d'entrée utilisateur,
**caractérisé en ce qu'**il est représenté, dans la même représentation hiérarchique qu'un objet ( 2 ) de la technologie sélectionnée, l'arbre ( 6 ) de câblage associé du côté entrée/ou du côté sortie de l'objet ( 2 ) de la technologie ensemble avec d'autres objets ( 2 ) de la technologie pour l'affichage du flux de signal de déplacement associé, de manière à obtenir une autre possibilité de navigation qui autorise une navigation au vu du flux de signal de déplacement de la machine ( 10 ) modélisée.

2. Navigateur de projet suivant la revendication 1, dans lequel, par rapport à un objet ( 2 ) de la technologie sélectionnée, l'arbre ( 6 ) de câblage associé du côté de l'entrée/ou du côté de la sortie de l'objet ( 2 ) de la technologie ainsi que tous les autres sous arbres ( 61, 62 ) sont représentés.

3. Navigateur de projet suivant la revendication 1 ou 2, dans lequel dans un fonctionnement en ligne de la machine ( 10 ) le câblage efficace respectif est représenté en étant souligné visuellement dans le navigateur de projet.

4. Navigateur de projet suivant la revendication 3, dans lequel les objets ( 2 ) de la technologie modélisent la fonction technologique d'un axe ( 7 ), d'un transmetteur ( 8 ), d'une valeur ( 9 ) de conduite, d'une came ( 10 ), d'un disque à came, d'une touche ( 11 ) de mesure et analogue.

5. Navigateur de projet suivant la revendication 4, dans lequel les objets ( 2 ) de la technologie ont une interface d'entrée qui peut être câblée et une interface de sortie qui peut être câblée.

6. Utilisation d'un navigateur ( 1 ) de projet suivant l'une des revendications précédentes pour la représentation hiérarchique rapportée à un projet d'objets ( 2 ) de la technologie d'une machine d'impression du papier, d'une usine de cellulose, d'une usine à papier, d'un laminoir ou analogue sur un dispositif ( 3 ) d'affichage.

7. Support de mémoire ayant un navigateur ( 1 ) de projet mémorisé sous une forme exploitable par une machine suivant l'une des revendications précédents 1 à 5.

8. Système d'ingénierie pour le projet d'au moins une partie d'une machine ( 10 ) ou d'une installation à commande de synchronisation en cascade, le système d'ingénierie ayant un dispositif ( 3 ) d'affichage, un moyen ( 5 ) d'entrée utilisateur et un processeur pour la réalisation d'un navigateur ( 1 ) de projet suivant l'une des revendications 1 à 5 pour la représentation hiérarchique rapportée à un projet d'objets ( 2 ) de la technologie sur le dispositif ( 3 ) d'affichage.
